# EUROPÄISCHE PATENTANMELDUNG

(11) **EP 3 189 736 A1**
(43) Veröffentlichungstag der Anmeldung: **12.07.2017**
(21) Anmeldenummer: 16002684.5
(22) Anmeldetag: 19.12.2016
(51) Int. Cl.: A23G 3/34

(54) **OBERFLÄCHENFÄRBUNG VON LEBENSMITTELN**

(30) Priorität: 05.01.2016 DE 102016000054
(71) Anmelder: Merck Patent GmbH, 64293 Darmstadt (DE)
(72) Erfinder: Schweinfurth, Ralf, 64287 Darmstadt (DE)

(57) **Zusammenfassung**

Die vorliegende Erfindung betrifft ein Verfahren zur Färbung von Lebensmittel-Oberflächen unter Einsatz von Effektpigmenten, welche auf plättchenförmigen Substraten basieren.

## Beschreibung

Die vorliegende Erfindung betrifft ein Verfahren zur Färbung von Lebensmittel-Oberflächen unter Einsatz von Effektpigmenten, welche auf plättchenförmigen Substraten basieren.

Außer für funktionelle Verwendungen werden Effektpigmente, z.B. Metall-, Perlglanz- und Interferenzpigmente immer mehr zur optischen Aufwertung von Produkten, z. B. in der Kosmetik, eingesetzt, da schöne Farben und Effekte beim Betrachter und Konsumenten angenehme subjektive Empfindungen hervorrufen. Bei der Herstellung von Perlglanzpigmenten, z. B. für den Nahrungsmittelbereich, werden strengste Anforderungen an die Reinheit und die Qualität der Pigmente gestellt. Perlglanzpigmente werden im Nahrungsmittelbereich bereits zur Verbesserung des Farbeffektes bzw. zur Farbgebung eingesetzt.

Eine mögliche Anwendung von Perlglanzpigmenten im Nahrungsmittelbereich besteht in der Oberflächenfärbung von Lebensmitteln, insbesondere tiefgekühlter Lebensmittel, wie z.B. Eiskrem.

Tiefgekühlte Lebensmittel, wie z.B. Eiskrem werden mit Effektpigmenten, z.B. Perlglanzpigmenten, üblicherweise dadurch eingefärbt, dass man vor dem Färben zunächst das/die Perlglanzpigment(e) in z.B. Lebensmittelfett, Fettcompound- bzw. fetthaltige Glasur oder Kakaobuttergemische einarbeitet und das Lebensmittel in einem zweiten Schritt mit der hergestellten, pigmentierten Überzugsmasse beschichtet. In die pigmentierte Überzugsmasse werden dann Lebensmittel, insbesondere tiefgekühlte Eiskremprodukte, kurz eingetaucht. Es entsteht sofort ein dünner Fettüberzug mit einem sichtbaren Perlglanzeffekt. Die Qualität des erzielten Perlglanzeffektes hängt in erster Linie von der Menge an zugesetztem Perlglanzpigment ab. Diese wiederum wird von der Art des verwendeten Überzugsmediums beeinflusst. Alternativ kann anstelle des Eintauchens das Eiskremprodukt auch mit den Fett-basierenden, perlglanzgefärbten Massen überzogen werden. Optional wird vor dem Perlglanz-Fettüberzug ein Überzug mit Schokolade bzw. Fettglasur aufgetragen. Bei dem vorstehenden Verfahren muss aufgrund der natürlichen Opazität der Fette die Menge an Perlglanzpigment entsprechend hoch gewählt werden. Typisch sind 2 - 8 Gew.-% Perlglanzpigment bezogen auf die gesamte pigmentierte Überzugsmasse. In Abhängigkeit der Überzugsmasse bilden sich bei der Einarbeitung des Effektpigments in das Lebensmittelfett, Fettcompound, etc., häufig Agglomerate und/oder die Effektpigmente setzen sich ab und es entsteht ein Bodensatz, der sich nur schwer wieder aufrühren lässt. Weiterhin ist häufig zu beobachten, dass die Effektpigmente sich nicht homogen in der Fettmasse verteilen. All diese Nachteile führen zu Einbußen bei den optischen Eigenschaften bzw. die optischen Eigenschaften der eingesetzten Effektpigmente kommen in der Fettmasse nicht voll zum Tragen.

Aufgabe der vorliegenden Erfindung ist es daher, ein gegenüber den Verfahren des Standes der Technik im Hinblick auf Wirtschaftlichkeit, aber auch optischen Eindruck und Breite der Anwendbarkeit verbessertes Verfahren für die Oberflächenfärbung von Lebensmitteln mit auf plättchenförmigen Substraten basierenden Effektpigmenten zur Verfügung zu stellen.

Überraschenderweise wurde nun gefunden, dass auf plättchenförmigen Substraten basierende Effektpigmente, insbesondere auf plättchenförmige Substrate aufgebrachtes Titandioxid und/oder Eisenoxid, auf Lebensmittel-Oberflächen vorteilhaft appliziert werden können durch direktes Auftragen pulverförmiger Perlglanzpigmente auf Lebensmittel-Oberflächen.

Optional wird zur Verbesserung der Pigment-Haftung vor dem Auftragen pulverförmiger Perlglanzpigmente auf die Lebensmittel-Oberfläche ein fetthaltiger Überzug aufgebracht (Variante A).

Weiterhin optional hat das Lebensmittel bereits eine mit Schokolade, Fettglasur oder dergleichen überzogene Oberfläche. In diesen Fällen kann das Aufbringen des fetthaltigen zur besseren Pigment-Haftung erforderlichen fetthaltigen Überzugs entfallen (Variante B).

Idealerweise gewährleistet das Produkt selbst bereits eine genügend hohe Anhaftung des Pigments (Variante C).

Weiterhin kann der Direktauftrag von Effektpigmenten allein oder gemischt mit Effektpigmenten und ein oder mehreren Lebensmittelfarbstoffen, vorzugsweise in Pulverform, erfolgen nach einer Vorbehandlung der zu färbenden Lebensmittel mit einer adhäsiven Lösung, die Lebensmittel vor dem Pigmentauftrag mittels Sprühen aufgebracht wird. (Variante D). Der Sprühauftrag bietet zusätzlich den Vorteil, dass deutlich weniger Lösung aufgetragen werden muss und damit die Auftragszeit deutlich verkürzt wird. Gleichzeitig wird die Benetzung der Produkte signifikant verbessert. Weiterhin werden sensitive Produkte durch die verringerte Benetzung weit weniger beschädigt, z.B. wird die Zuckeroberfläche kaum verändert im Gegensatz zum Handauftrag. Als adhäsives Benetzungsmittel wird vorzugsweise Gummi Arabicum verwendet. Die Konzentration der Lösung beträgt vorzugsweise 5-40 % in der Lösung. In der Regel wird eine wässrige Gummi-Arabicum-Lösung verwendet, die gegebenenfalls auch bis zu 25 % Ethanol enthalten kann. Alternativ kann auch Schellack in alkoholischer Lösung, vorzugsweise in Konzentrationen von 5-40 % bezogen auf die Lösung, verwendet werden. Bei der Variante D richtet sich die Menge an Perlglanzpigment nach dem zu färbenden Produkt bzw. dessen Oberfläche. In der Regel werden 0,05 -10 % Perlglanzpigment, vorzugsweise 0,1 - 6 %, benötigt um die Oberfläche bzw. das zu färbende Produkt von außen mit Perlglanz zu versehen.

Bei den einzufärbenden Lebensmittel-Oberflächen handelt es sich vorzugsweise um Oberflächen tiefgekühlter Lebensmittel, wie z.B. Eiskrem oder Speiseeis. Die erfindungsgemäße direkte Applikation von Perlglanzpigmenten auf Lebensmittel ist aber nicht auf Eiskrem oder Speiseeis beschränkt, sondern kann auch auf allen Arten von Lebensmitteln angewendet werden, insbesondere Zucker- und Schellacküberzüge, Zuckerwaren, Kuchendekorationen, Komprimate, Dragees, Kaugummis, Popcorn, Mashmallows, Gummiwaren, Gelee- und Gelatinewaren, Bonbons, Lakritze, Zuckerguss, Zuckerwatte, Fett-, Zucker- und Crememassen, Puddings, Desserts, Tortenguss, Kaltschalen, Getränke mit stabilisierenden Additiven, wie z. B. Carboxymethylcellulose, gesäuerte und ungesäuerte Milchprodukte, wie z. B. Quark, Joghurt, Käse, Käserinden, Wursthüllen, etc.

Voraussetzung ist eine genügend gute Anhaftung der Effektpigmente, insbesondere Perlglanzpigmente, auf der Produktoberfläche. Diese wird entweder durch das zuvor beschriebene vorherige Aufbringen geeigneter Überzugsmassen (z.B. Fettglasuren, Fettcompounds, pflanzliches Fett, Kakaobutter, Schokolade) gewährleistet (Varianten A und B), durch das Produkt selbst (Variante C), z.B. Softeis, Butterkrem oder Schlagsahne, vorausgesetzt die Produktoberfläche selbst gewährleistet eine genügend hohe Anhaftung oder mittels einer adhäsiven Lösung (Variante D). Auch Karamell- oder Fruchtsoßen sind als Überzugsmedien zur Pigmentanhaftung geeignet.

Das erfindungsgemäße Verfahren ermöglicht die direkte Applikation von Effektpigmenten auf teilgefrorenen und ungefrorenen Lebensmitteln aller Art.

Unter dem Begriff plättchenförmige Substrate sind alle dem Fachmann bekannten plättchenförmigen Substrate zu verstehen. Geeignete Basissubstrate für die Effektpigmente, wie z.B. Perlglanzpigmente und Interferenzpigmente, sind transparente oder semitransparente plättchenförmige Substrate. Bevorzugte Substrate sind Schichtsilikate. Insbesondere geeignet sind natürlicher und/oder synthetischer Glimmer, Talkum, Kaolin, plättchenförmige Eisen- oder Aluminiumoxide, Glas-, SiO₂-, TiO₂-, plättchenförmige Mischoxide, wie z. B. FeTiO₃, Fe₂TiO₅, oder andere vergleichbare Materialien, abhängig von der jeweiligen gesetzlichen Zulässigkeit für die Verwendung bei Lebensmitteln bzw. pharmazeutischen Produkten.

Bevorzugte Effektpigmente, wie z.B. Perlglanzpigmente, basieren auf natürlichen Glimmerplättchen, synthetischen Glimmerplättchen, SiO₂-Plättchen, Al₂O₃-Plättchen, TiO₂-Plättchen, Glasplättchen, Fe₂O₃-Plättchen, insbesondere synthetische oder natürliche Glimmerplättchen und SiO₂-Plättchen (Nr. E555 bzw. E551 in der Liste der in der Europäischen Union zugelassenen Lebensmittelzusatzstoffe). Die synthetischen Plättchen, wie z.B. synthetische Glimmerplättchen, SiO₂-Plättchen, Al₂O₃-Plättchen, TiO₂-Plättchen, Glasplättchen, können dotiert oder undotiert sein. Geeignete Dotiermittel sind u.a. Metalloxide, wie z.B. TiO₂, ZrO₂, SnO₂.

Die Größe der Basissubstrate ist an sich nicht kritisch und kann auf den jeweiligen Anwendungszweck abgestimmt werden. In der Regel haben die plättchenförmigen Substrate eine Dicke von 0,005 bis 10 µm, insbesondere von 0,05 und 5 µm. Die Ausdehnung in den beiden anderen Bereichen beträgt üblicherweise 1 bis 500 µm, vorzugsweise 2 bis 200 µm, und insbesondere 5 bis 150 µm. Ganz besonders bevorzugte Perlglanzpigmente weisen Partikelgrößen von 10 -60 µm oder 5-25 µm oder 10-150 µm oder 5-50 µm auf. Weiterhin sind bevorzugt Perlglanzpigmentgemische, die unterschiedliche Partikelgrößen aufweisen. Besonderen Effekte können erzielt werden, wenn Perlglanzpigmente mit "kleinen" Partikelgrößen wie z.B. 5-25 µm oder 10-60 µm mit Perlglanzpigmenten mit "großen" Partikelgrößen, wie z.B. 10-150 µm, gemischt werden.

Die Dicke der einzelnen Schichten, vorzugsweise ein oder mehrere Metalloxidschichten, auf dem Basissubstrat beträgt vorzugsweise 10 - 500 nm, insbesondere 20-400 nm und ganz besonders bevorzugt 30 - 350 nm.

Bei Mehrschichtpigmenten, die auf der Substratoberfläche alternierend hoch- und niedrigbrechende Schichten aufweisen, besitzt die hochbrechende Schicht (Schicht A) in der Regel Schichtdicken von 10 - 500 nm, vorzugsweis 20 - 400 nm und insbesondere 30 - 350 nm. Die Dicke der niedrigbrechenden Schicht (Schicht B) beträgt vorzugsweise 10-500 nm, vorzugsweise 20 - 400 nm, insbesondere 30 - 350 nm.

Unter hochbrechenden Schichten sind in dieser Anmeldung Schichten mit einem Brechungsindex von ≥ 1,8 zu verstehen, während niedrigbrechende Schichten einen Brechungsindex von < 1,8 aufweisen.

Die Effektpigmente, vorzugsweise Perlglanzpigmente, können mehrere, gleiche oder verschiedene Kombinationen an Schichtpaketen enthalten, bevorzugt ist aber die Belegung des Substrats bei Mehrschichtpigmenten mit nur einem Schichtpaket (A) (B) (A). Zur Intensivierung der Farbstärke kann das erfindungsgemäße Pigment bis zu 4 Schichtpakete enthalten, wobei die Dicke aller Schichten auf dem Substrat 3 µm allerdings nicht überschreiten sollte. Vorzugsweise wird bei Mehrschichtpigmenten mit 3 oder mehr Schichten auf der Substratoberfläche eine ungerade Anzahl von Schichten auf das plättchenförmige Substrat aufgebracht mit je einer hochbrechenden Schicht in innerster und äußerster Lage. Besonders bevorzugt ist ein Aufbau von drei optischen Interferenzschichten in der Reihenfolge (A) (B) (A). Als hochbrechende Schicht kommen vorzugsweise TiO₂, Fe₂O₃ und/oder Fe₃O₄ in Frage. Das TiO₂ kann dabei in der Rutil- oder in der Anatasmodifikation vorliegen.

Als farblose niedrigbrechende für die Beschichtung (B) geeignete Materialien sind vorzugsweise Metalloxide bzw. die entsprechenden Oxidhydrate, wie z. B. SiO₂, Al₂O₃, AlO(OH), B₂O₃, MgF₂, MgSiO₃ oder ein Gemisch der genannten Metalloxide, geeignet entsprechend der gesetzlichen Zulassungen zur Verwendung bei Lebensmitteln bzw. pharmazeutischen Produkten. Bei der Schicht (B) handelt es sich insbesondere um eine SiO₂-Schicht.

Die plättchenförmigen Substrate sind mit ein oder mehreren, vorzugsweise ein, zwei oder drei Metalloxiden und/oder mit einem Metalloxidgemisch belegt. Geeignete Metalloxide sind insbesondere Titandioxid und Eisenoxid oder ein Gemisch aus Titandioxid und Eisenoxid.

Unter dem Begriff Titandioxid ist TiO₂ zu verstehen (Nr. E171 in der Liste der in der Europäischen Union zugelassenen Lebensmittelzusatzstoffe). Unter dem Begriff Eisenoxid sind sowohl Fe₂O₃ als auch Fe₃O₄ zu verstehen (Nr. E172 in der Liste der in der Europäischen Union zugelassenen Lebensmittelzusatzstoffe).

Die plättchenförmigen Substrate können auch mit einem Gemisch aus TiO₂ und Fe₂O₃ oder Fe₃O₄ beschichtet sein.

Bevorzugte Effektpigmente sind insbesondere ausgewählt aus den nachfolgend genannten Pigmenten:
natürliche Glimmerplättchen + TiO₂
natürliche Glimmerplättchen + Fe₂O₃
natürliche Glimmerplättchen + Fe₃O₄
natürliche Glimmerplättchen + TiO₂ + Fe₂O₃
natürliche Glimmerplättchen + TiO₂ + Fe₃O₄
natürliche Glimmerplättchen + Fe₂O₃ + TiO₂
natürliche Glimmerplättchen + Fe₃O₄ + TiO₂
natürliche Glimmerplättchen + TiO₂/Fe₂O₃-Gemisch
natürliche Glimmerplättchen + TiO₂/Fe₃O₄-Gemisch
synthetische Glimmerplättchen + TiO₂
synthetische Glimmerplättchen + Fe₂O₃
synthetische Glimmerplättchen + Fe₃O₄
synthetische Glimmerplättchen + TiO₂ + Fe₂O₃
synthetische Glimmerplättchen + TiO₂ + Fe₃O₄
synthetische Glimmerplättchen + Fe₂O₃ + TiO₂
synthetische Glimmerplättchen + Fe₃O₄ + TiO₂
synthetische Glimmerplättchen + TiO₂/Fe₂O₃-Gemisch
synthetische Glimmerplättchen + TiO₂/Fe₃O₄-Gemisch
SiO₂-Plättchen + TiO₂
SiO₂-Plättchen + Fe₂O₃
SiO₂-Plättchen + Fe₃O₄
SiO₂-Plättchen + TiO₂ + Fe₂O₃
SiO₂-Plättchen + TiO₂ + Fe₃O₄
SiO₂-Plättchen + Fe₂O₃ + TiO₂
SiO₂-Plättchen + Fe₃O₄ + TiO₂
SiO₂-Plättchen + TiO₂/Fe₂O₃-Gemisch
SiO₂-Plättchen + TiO₂/Fe₃O₄-Gemisch
natürliche Glimmerplättchen + TiO₂ + SiO₂ + TiO₂
natürliche Glimmerplättchen + Fe₂O₃ + SiO₂ + TiO₂
natürliche Glimmerplättchen + TiO₂ + SiO₂ + Fe₂O₃
natürliche Glimmerplättchen + TiO₂ + SiO₂ + Fe₃O₄
natürliche Glimmerplättchen + TiO₂/Fe₂O₃-Gemisch + SiO₂ + Fe₂O₃
natürliche Glimmerplättchen + TiO₂/Fe₂O₃-Gemisch + SiO₂ + TiO₂/Fe₂O₃-Gemisch
natürliche Glimmerplättchen + Fe₂O₃-Gemisch + SiO₂ + TiO₂/Fe₂O₃-Gemisch
synthetische Glimmerplättchen + TiO₂ + SiO₂ + TiO₂
synthetische Glimmerplättchen + Fe₂O₃ + SiO₂ + TiO₂
synthetische Glimmerplättchen + TiO₂ + SiO₂ + Fe₂O₃
synthetische Glimmerplättchen + TiO₂ + SiO₂ + Fe₃O₄
synthetische Glimmerplättchen + TiO₂/Fe₂O₃-Gemisch + SiO₂ + Fe₂O₃
synthetische Glimmerplättchen + TiO₂/Fe₂O₃-Gemisch + SiO₂ + TiO₂/Fe₂O₃-Gemisch
synthetische Glimmerplättchen + Fe₂O₃-Gemisch + SiO₂ + TiO₂/Fe₂O₃-Gemisch
SiO₂-Plättchen + TiO₂ + SiO₂ + TiO₂
SiO₂-Plättchen + Fe₂O₃ + SiO₂ + TiO₂
SiO₂-Plättchen + TiO₂ + SiO₂ + Fe₂O₃
SiO₂-Plättchen + TiO₂ + SiO₂ + Fe₃O₄
SiO₂-Plättchen + TiO₂/Fe₂O₃-Gemisch + SiO₂ + Fe₂O₃
SiO₂-Plättchen + TiO₂/Fe₂O₃-Gemisch + SiO₂ + TiO₂/Fe₂O₃-Gemisch
SiO₂-Plättchen + Fe₂O₃-Gemisch + SiO₂ + TiO₂/Fe₂O₃-Gemisch

Die für den Lebensmittelbereich zugelassenen Perlglanz- und Interferenzpigmente sind im Handel erhältlich, beispielsweise unter der Marke Candurin^{®} von der Fa. Merck KGaA.

Die bekannten Effektpigmente, wie z.B. Perlglanzpigmente, Interferenzpigmente und Mehrschichtpigmente, lassen sich leicht herstellen durch die Erzeugung ein oder mehrerer hoch- bzw. niedrigbrechender Interferenzschichten mit genau definierter Dicke und glatter Oberfläche auf den feinteiligen, plättchenförmigen Substraten.

Die Metalloxidschichten werden vorzugsweise nasschemisch aufgebracht, wobei die zur Herstellung von Perlglanzpigmenten entwickelten nasschemischen Beschichtungsverfahren angewendet werden können. Derartige Verfahren sind z. B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen. Weiterhin kann die Beschichtung auch in einem Wirbelbettreaktor durch Gasphasenbeschichtung erfolgen, wobei z. B. die in EP 0 045 851 und EP 0 106 235 zur Herstellung von Perlglanzpigmenten vorgeschlagenen Verfahren entsprechend angewendet werden können.

Der Farbton der Effektpigmente kann in sehr weiten Grenzen durch unterschiedliche Wahl der Belegungsmengen bzw. der daraus resultierenden Schichtdicken variiert werden. Die Feinabstimmung für einen bestimmten Farbton kann über die reine Mengenwahl hinaus durch visuell oder messtechnisch kontrolliertes Anfahren der gewünschten Farbe erreicht werden.

Die eingefärbten Lebensmittel zeichnen sich durch einen Farbeffekt aus, der auf der Lichtbrechung der Effektpigmente, insbesondere Perlglanzpigmente, beruht und beim Betrachter und Konsumenten angenehme subjektive Empfindungen hervorruft. Einzelheiten sind in der WO 2000/003609 und EP 1 469 745 A1 offenbart.

Von Bedeutung ist, dass bei Einsatz der Verfahren nach Variante A oder Variante B der fetthaltige Überzug zum Zeitpunkt des Auftrags pulverförmiger Perlglanzpigmente noch flüssig-viskos ist. D.h. im engeren Sinne, dass der Fettanteil des Überzugs zum Zeitpunkt des Pigmentauftrages noch so viskos/flüssig ist, dass die Perlglanzpigmente gezielt aufgebracht werden können, und nach dem kältebedingten Erstarren des Überzugs dann dauerhaft auf diesem bzw. dem Endprodukt fixiert sind/ist, um eine genügende Anhaftung der Perlglanzpigmente im weiteren Produktionsablauf zu gewährleisten. Wird ein Pulverlackierungssystem zum Pigmentauftrag verwendet, so sollte dieses optimal auf die Pigmente eingestellt werden, als auch das zu färbende Lebensmittel hinsichtlich der für die Anhaftung wichtigen Parameter (Fettgehalt, Feuchtigkeit etc.) entsprechend ausgewählt werden

Zur erfindungsgemäßen direkten Färbung von Lebensmittel-Oberflächen können sowohl einzelne Perlglanzpigmente, Mischungen von Perlglanzpigmenten bzw. Mischungen von pulverförmigen Lebensmittelfarbstoffen (natürlicher bzw. künstlicher Herkunft) mit Perlglanzpigmenten aufgebracht werden. Dem Mischverhältnis sind dabei keine Grenzen gesetzt. Vorzugsweise werden aber nicht mehr als zwei unterschiedliche Perlglanzpigmente miteinander gemischt.

Zur Verbesserung des Farb- und Glanzeffektes der aufgebrachten Effektpigmente kann es sinnvoll sein, den fetthaltigen Überzug (Variante A) oder die Schokolade/Fettglasur (Variante B) mit entsprechend passenden Farbstoffen und/oder Pigmenten einzufärben. Auf diesen eingefärbten Überzug bzw. eingefärbte Schokolade/Fettglasur werden dann die gewünschten Perlglanzpigmente aufgebracht. Für ein solchermaßen ausgestaltetes Verfahren werden insbesondere zur Farbe des Überzugs/der Schokolade/Fettglasur passende Farbstoffe und/oder Pigmente eingesetzt, welche in den fetthaltigen Überzug bzw. die Schokolade/Fettglasur eingearbeitet werden. Vorzugsweise lassen sich hierzu auch farblich passende Perlglanzpigmente verwenden. Es können aber auch alle Arten von natürlichen oder naturidentischen Lebensmittelfarbstoffen beigemischt werden. Insbesondere sind hier zu erwähnen E101, E104, E110, E124, E131, E132, E140, E141, E151 und E160a. Der resultierende Perlglanzeffekt wird durch dieses Vorgehen weiter optimiert. Besonders bevorzugt werden Überzüge aus weißer Schokolade vor dem Aufbringen von Perlglanzpigmenten mit Farbstoffen und/oder Pigmenten eingefärbt.

Das direkte Aufbringen der Effektpigmente auf Lebensmittel-Oberflächen kann durch mechanische oder vorteilhaft durch pneumatische Verfahren erfolgen.

Mechanische Verfahren können z.B. das Aufstäuben mittels Pinsel oder rotierender Bürsten beinhalten, oder mittels entsprechend feiner Siebe und anderer mechanischer Auftragswerkzeuge für pulverförmige Stoffe.

An pneumatischen Methoden zur Aufbringung pulverförmiger Zutaten stehen vom Einsatz eines einfachen Blasebalgzerstäubers über Pumpzerstäuber bis hin zum Einsatz von elektrischen Pulverzerstäubern, oder Pulverlackiersystemen eine Vielzahl von geeigneten Methoden (und Auftragsgeräten) zur Verfügung.

Durch pneumatischen Auftrag kann, je nach ausgewähltem AuftragsSystem, eine gleichmäßige Aufbringung einer sehr kleinen Pigmentmenge gewährleistet werden. Je nach Werkzeug kann der Auftrag bei den mechanischen Verfahren zu unterschiedlichen Ergebnissen führen.

Durch Einsatz des erfindungsgemäßen Verfahrens lässt sich im Vergleich zum herkömmlichen Verfahren des Perlglanzauftrages in einem Fetthaltigen Überzug ein verbesserter Glanzeffekt erzielen, da das Perlglanzpigment bzw. die Pigment-Gemische direkt und gleichmäßig auf die Lebensmittel-Oberfläche aufgetragen werden. Hierdurch wird eine optimale, ungehinderte Lichtreflexion durch die aufgetragenen Perlglanzpigmente erzeugt. Das Resultat ist ein optisch intensiver Perlglanz mit unverfälschten Glanzeffekt.

Weiterhin kann die zur Erzielung des Glanzeffektes einzusetzende Menge an Perlglanzpigment gegenüber dem herkömmlichen Verfahren deutlich reduziert werden. Typischerweise werden 0,005 - 10 Gew.%, vorzugsweise 0,005 - 6 Gew.%, insbesondere 0,005 - 1 Gew.% Perlglanzpigment eingesetzt, bezogen auf die Gesamtmasse des Lebensmittels und in Abhängigkeit des zu färbenden Produkts bzw. dessen Oberfläche. Die Menge richtet sich hierbei zuerst nach der Intensität des gewünschten Perlglanzeffektes. Perlglanzpigment, welches beim Aufbringen nicht anhaftet, kann nach einer entsprechenden Rückführung im weiteren Verfahren wieder verwendet werden. Hierdurch wird Abfall vermieden, Kosten werden reduziert und die Auftragsmenge wird weiter verringert.

Die nachfolgenden Beispiele sollen die Erfindung erläutern, ohne sie jedoch zu begrenzen.

### Beispiele:

### Vorgehensweise für Beispiele 1 - 5:

Kurzes Eintauchen des Eiskremprodukts (ca. oberes Drittel - Mitte) in den vorgefärbten und erwärmten Fettüberzug (1). Nach Herausziehen und kurzem Abtropfen des überschüssigen Fetts wird ein Perlglanzpigment (2) mittels eines pneumatischen Pulver-Zerstäubers auf die noch flüssige Eiskremoberfläche gleichmäßig aufgebracht bzw. zerstäubt. Hierbei wird das Perlglanzpigment durch das nunmehr vollständig erstarrende Fett auf der Oberfläche fixiert.

Durch den Auftrag mittels eines pneumatischen Auftragsverfahrens entsteht ein sehr gleichmäßiger, hochglänzender Perlglanzeffekt auf der Produktoberfläche bei gleichzeitiger sehr geringer Dosierung.

### Beispiel 1

Zu färbendes Produkt: Eiskrem am Stiel mit dunkler Schokolade überzogen
(1) Fettüberzug:

| | |
|---|---|
| 99,97 Gew.-% | Fettcompound (pflanzliches Fett, Zucker, Lecithin, Aroma) Kerry GmbH |
| 0,03 Gew.-% | Pflanzenkohle (E153) Roha Ltd. |

(2) Aufgebrachtes Perlglanzpigment Candurin^{®} Silver Sparkle* (E555 + E171) Merck KGaA (*natürliches Glimmerplättchen (Teilchengröße 10-150 µm) beschichtet mit TiO₂)

### Beispiel 2

Zu färbendes Produkt: Eiskrem am Stiel mit dunkler Schokolade überzogen
(1) Fettüberzug:

| | |
|---|---|
| 98,0 Gew.-% | Fettcompound (pflanzliches Fett, Zucker, Lecithin, Aroma) Kerry GmbH |
| 2,0 Gew.-% | Perlglanzpigment Candurin^{®} Gold Lustre* (E555 + E171 + E172) Merck KGaA |

(*natürliches Glimmerplättchen (Teilchengröße 10-60 µm) beschichtet mit TiO₂ und Fe₂O₃)
(2) Aufgebrachtes Perlglanzpigment Candurin^{®} Gold Sparkle* (E555 + E171 + E172) Merck KGaA (*natürliches Glimmerplättchen (Teilchengröße 10-150 µm) beschichtet mit TiO₂ und Fe₂O₃)

### Beispiel 3

Zu färbendes Produkt: Eiskrem am Stiel mit dunkler Schokolade überzogen
(1) Fettüberzug:

| | |
|---|---|
| 98,0 Gew.-% | Fettcompound (pflanzliches Fett, Zucker, Lecithin, Aroma) Kerry GmbH |
| 2,0 Gew.-% | Perlglanzpigment Candurin^{®} Red Lustre* (E555 + E172) Merck KGaA |

(*natürliches Glimmerplättchen (Teilchengröße 10-60 µm) beschichtet mit Fe₂O₃)
(2) Aufgebrachtes Perlglanzpigment Candurin^{®} Red Sparkle* (E555 + E172) Merck KGaA (*natürliches Glimmerplättchen (Teilchengröße 10-150 µm) beschichtet mit Fe₂O₃)

### Beispiel 4

Zu färbendes Produkt: Eiskrem am Stiel mit dunkler Schokolade überzogen
(1) Fettüberzug:

| | |
|---|---|
| 99,97 Gew.-% | Fettcompound (pflanzliches Fett, Zucker, Lecithin, Aroma) Kerry GmbH |
| 0,03 Gew.-% | Farblack-Karmin 52%ig (E120) Fiorio Colori |

(2) Als Mischung aufgebrachte Perlglanzpigmente Candurin^{®} Silver Lustre*¹ (E555 + E171) + Candurin^{®} Red Lustre*² (E555 + E172); Mischungsverhältnis 4 : 1 Merck KGaA
(*¹ natürliches Glimmerplättchen (Teilchengröße 10-60 µm) beschichtet mit TiO₂)
(*² natürliches Glimmerplättchen (Teilchengröße 10-60 µm) beschichtet mit Fe203)

### Beispiel 5

Zu färbendes Produkt: Eiskrem am Stiel mit dunkler Schokolade überzogen
(1) Fettüberzug:

| | |
|---|---|
| 98,0 Gew.-% | Fettcompound (pflanzliches Fett, Zucker, Lecithin, Aroma) Kerry GmbH |
| 2,0 Gew.-% | Perlglanzpigment Candurin^{®} Rouge* (E551 + E172) Merck KGaA |

(2) Aufgebrachtes Perlglanzpigment:
Candurin^{®} Rouge* (E551 + E172) Merck KGaA
(* SiO₂-Plättchen (Teilchengröße 5-50 µm) beschichtet mit Fe₂O₃)

### Beispiel 6

Zu färbendes Produkt: Muffin mit Überzug (dunkle Kakaoglasur) Muffin
(1) Überzug mit dunkler Kakao-Fettglasur
(2) Direktes Aufbringen von Candurin^{®} Silver Lustre (E555 + E171) vor dem Erstarren der Fettglasur

Der Auftrag des Perlglanzpigments (Candurin^{®}-Pigment) erfolgt vor dem Erstarren der Glasur, um eine genügend hohe Anhaftung des Perlglanzpigments zu erzielen. Der sehr gleichmäßige Auftrag wird mittels eines pneumatischen Verfahrens erzielt.

### Beispiel 7

Zu färbendes Produkt: Muffin mit Überzug (dunkle Kakaoglasur) Muffin
(1) Überzug mit dunkler Kakao-Fettglasur
(2) Direktes Aufbringen von Candurin^{®} Red Shimmer* (E555 + E171) vor dem Erstarren der Fettglasur
(* natürliches Glimmerplättchen (Teilchengröße 10-60 µm) beschichtet mit TiO₂)

Der Auftrag des Perlglanzpigments (Candurin^{®}-Pigment) erfolgt vor dem Erstarren der Glasur, um eine genügend hohe Anhaftung des Perlglanzpigments zu erzielen. Die im Vergleich zu Beispiel 6 unregelmäßigere Färbung des Produkts ist auf den Auftrag des Perlglanzpigments mittels eines mechanischen Verfahrens zurückzuführen.

### Beispiel 8

Benetzungslösung (A) (=adhäsive Lösung)
15 % Alkohol (96 Vol. % - Merck KGaA)
10 % Gummi Arabicum (Fa. Roeper)
75 % Wasser

Alle Zutaten werden unter Rühren gemischt. Rührzeit beträgt ca. 60 - 90 Minuten. Anschließend erhält man eine klare, sprühfertige Lösung

Diese wird nun mittels Zerstäuberluft auf die zu färbenden Produkte gesprüht. Das Aufsprühen geschieht vorzugsweise in einem Dragierkessel, kann aber auch auf anderen geeigneten Unterlagen oder Bändern erfolgen. Ist die gewünschte Menge an Suspension aufgetragen, wird nun die berechnete Menge an Perlglanzpigment, bzw. Mischung Perlglanzpigment mit anderen pulverförmigen Lebensmittelfarbstoffen aufgestreut. Hierbei eignet sich z.B. ein Sieb sehr gut.

### Beispiel 8a: Färbung von Popcorn im Dragierkessel

1 % der Benetzungslösung (A) wird mittels Druckluftpistole auf die im Dragierkessel rotierenden Produkte aufgesprüht. Nachdem das Popcorn hinreichend benetzt wurde, wird nun 1 % Candurin^{®} Gold Sparkle mittels eines Siebs aufgestreut. Im Anschluss wird das noch immer im Dragierkessel rotierende Popcorn mittels Zufuhr von warmer Luft getrocknet.

### Beispiel 8b: Färbung von Popcorn im Dragierkessel

1,5 % der Benetzungslösung (A) wird mittels Druckluftpistole auf die im Dragierkessel rotierenden Produkte aufgesprüht. Nachdem das Popcorn hinreichend benetzt wurde, wird nun 1,5 % Candurin^{®} Silver Lustre gemischt mit 0,05% Carbon Black (E153) (Fiorio Colori) mittels eines Siebs aufgestreut. Im Anschluss wird das noch immer im Dragierkessel rotierende Popcorn mittels Zufuhr von warmer Luft getrocknet.

### Beispiel 8c: Färbung von Marshmallow-Stücken im Dragierkessel

1,5 % der Benetzungslösung (A) wird mittels Druckluftpistole auf die im Dragierkessel rotierenden Produkte aufgesprüht.
Nachdem die Marshmallows hinreichend benetzt wurden, wird nun 2 % Candurin^{®} Silver Sparkle mittels eines Siebs aufgestreut.
Im Anschluss werden die immer noch im Dragierkessel rotierenden Marshmallow-Stücke mittels Zufuhr von warmer Luft getrocknet.

## Patentansprüche

1. Verfahren zur Einfärbung einer Lebensmitteloberfläche mit Effektpigmenten basierend auf plättchenförmigen Substraten, **dadurch gekennzeichnet dass** die Pigmente durch pneumatische oder mechanische Verfahren auf die Lebensmitteloberfläche aufgebracht werden.

2. Verfahren nach Anspruch 1, **dadurch gekennzeichnet dass** die Aufbringung mittels pneumatischer Verfahren erfolgt.

3. Verfahren nach Anspruch 2, **dadurch gekennzeichnet dass** die Aufbringung mittels eines Blasebalgzerstäubers, eines Pumpzerstäuber oder eines elektrischen Pulverzerstäubers erfolgt.

4. Verfahren nach Anspruch 1, **dadurch gekennzeichnet dass** die Aufbringung mittels mechanischer Verfahren erfolgt.

5. Verfahren nach Anspruch 4, **dadurch gekennzeichnet dass** die Aufbringung mittels Pinsel, rotierender Bürsten oder durch Siebe erfolgt.

6. Verfahren nach einem oder mehreren der Ansprüche 1 bis 5, **dadurch gekennzeichnet, dass** vor dem Aufbringen der Effektpigmente zur Verbesserung der Pigment-Haftung auf die Lebensmitteloberfläche ein gegebenenfalls fetthaltiger Überzug oder eine adhäsive Lösung aufgebracht wird.

7. Verfahren nach einem oder mehreren der Ansprüche 1 bis 6, **dadurch gekennzeichnet, dass** vor dem Aufbringen der Effektpigmente das zu färbende Lebensmittel mit einer adhäsiven Lösung mittels Sprühen vorbehandelt wird.

8. Verfahren nach einem oder mehreren der Ansprüche 1 bis 7, **dadurch gekennzeichnet, dass** es sich bei adhäsiven Lösung um eine Gummi Arabicum- oder Schellack-Lösung handelt.

9. Verfahren nach einem oder mehreren der Ansprüche 1 bis 8, **dadurch gekennzeichnet, dass** es sich bei dem gegebenenfalls fetthaltigen Überzug um einen Fettcompound, um pflanzliches Fett, Kakaobutter, Karamell- und/oder Fruchtsoßen handelt.

10. Verfahren nach einem oder mehreren der Ansprüche 1 bis 9, **dadurch gekennzeichnet, dass** die Lebensmitteloberfläche eine mit Schokoladeüberzug, Fettglasur oder dergleichen überzogene Oberfläche ist.

11. Verfahren nach einem oder mehreren der Ansprüche 1 bis 10,
**dadurch gekennzeichnet, dass** das Lebensmittel ein tiefgekühltes Lebensmittel ist.

12. Verfahren nach einem oder mehreren der Ansprüche 1 bis 11,
**dadurch gekennzeichnet, dass** das tiefgekühlte Lebensmittel Speiseeis oder Eiskrem ist.

13. Verfahren nach einem oder mehreren der Ansprüche 1 bis 12,
**dadurch gekennzeichnet, dass** das plättchenförmige Substrat ein natürliches Glimmerplättchen, ein synthetisches Glimmerplättchen, ein Glasplättchen, ein Siliziumdioxid-Plättchen, ein Titandioxid-Plättchen, ein Glasplättchen, ein Aluminiumoxid-Plättchen oder ein Eisenoxidplättchen ist.

14. Verfahren nach einem oder mehreren der Ansprüche 1 bis 13,
**dadurch gekennzeichnet, dass** das plättchenförmige Substrat mit ein oder mehreren Schichten aus Metalloxiden und/oder Metalloxidgemischen vollständig beschichtet ist.

15. Verfahren nach einem oder mehreren der Ansprüche 1 bis 14,
**dadurch gekennzeichnet, dass** das Effektpigment ausgewählt ist aus den nachfolgend genannten Pigmenten:
natürliche Glimmerplättchen + TiO₂
natürliche Glimmerplättchen + Fe₂O₃
natürliche Glimmerplättchen + Fe₃O₄
natürliche Glimmerplättchen + TiO₂ + Fe₂O₃
natürliche Glimmerplättchen + TiO₂ + Fe₃O₄
natürliche Glimmerplättchen + Fe₂O₃ + TiO₂
natürliche Glimmerplättchen + Fe₃O₄ + TiO₂
natürliche Glimmerplättchen + TiO₂/Fe₂O₃-Gemisch
natürliche Glimmerplättchen + TiO₂/Fe₃O₄-Gemisch
synthetische Glimmerplättchen + TiO₂
synthetische Glimmerplättchen + Fe₂O₃
synthetische Glimmerplättchen + Fe₃O₄
synthetische Glimmerplättchen + TiO₂ + Fe₂O₃
synthetische Glimmerplättchen + TiO₂ + Fe₃O₄
synthetische Glimmerplättchen + Fe₂O₃ + TiO₂
synthetische Glimmerplättchen + Fe₃O₄ + TiO₂
synthetische Glimmerplättchen + TiO₂/Fe₂O₃-Gemisch
synthetische Glimmerplättchen + TiO₂/Fe₃O₄-Gemisch
SiO₂-Plättchen + TiO₂
SiO₂-Plättchen + Fe₂O₃
SiO₂-Plättchen + Fe₃O₄
SiO₂-Plättchen + TiO₂ + Fe₂O₃
SiO₂-Plättchen + TiO₂ + Fe₃O₄
SiO₂-Plättchen + Fe₂O₃ + TiO₂
SiO₂-Plättchen + Fe₃O₄ + TiO₂
SiO₂-Plättchen + TiO₂/Fe₂O₃-Gemisch
SiO₂-Plättchen + TiO₂/Fe₃O₄-Gemisch
natürliche Glimmerplättchen + TiO₂ + SiO₂ + TiO₂
natürliche Glimmerplättchen + Fe₂O₃ + SiO₂ + TiO₂
natürliche Glimmerplättchen + TiO₂ + SiO₂ + Fe₂O₃
natürliche Glimmerplättchen + TiO₂ + SiO₂ + Fe₃O₄
natürliche Glimmerplättchen + TiO₂/Fe₂O₃-Gemisch + SiO₂ + Fe₂O₃
natürliche Glimmerplättchen + TiO₂/Fe₂O₃-Gemisch + SiO₂ + TiO₂/Fe₂O₃-Gemisch
natürliche Glimmerplättchen + Fe₂O₃-Gemisch + SiO₂ + TiO₂/Fe₂O₃-Gemisch
synthetische Glimmerplättchen + TiO₂ + SiO₂ + TiO₂
synthetische Glimmerplättchen + Fe₂O₃ + SiO₂ + TiO₂
synthetische Glimmerplättchen + TiO₂ + SiO₂ + Fe₂O₃
synthetische Glimmerplättchen + TiO₂ + SiO₂ + Fe₃O₄
synthetische Glimmerplättchen + TiO₂/Fe₂O₃-Gemisch + SiO₂ + Fe₂O₃
synthetische Glimmerplättchen + TiO₂/Fe₂O₃-Gemisch + SiO₂ + TiO₂/Fe₂O₃-Gemisch
synthetische Glimmerplättchen + Fe₂O₃-Gemisch + SiO₂ + TiO₂/Fe₂O₃-Gemisch
SiO₂-Plättchen + TiO₂ + SiO₂ + TiO₂
SiO₂-Plättchen + Fe₂O₃ + SiO₂ + TiO₂
SiO₂-Plättchen + TiO₂ + SiO₂ + Fe₂O₃
SiO₂-Plättchen + TiO₂ + SiO₂ + Fe₃O₄
SiO₂-Plättchen + TiO₂/Fe₂O₃-Gemisch + SiO₂ + Fe₂O₃
SiO₂-Plättchen + TiO₂/Fe₂O₃-Gemisch + SiO₂ + TiO₂/Fe₂O₃-Gemisch
SiO₂-Plättchen + Fe₂O₃-Gemisch + SiO₂ + TiO₂/Fe₂O₃-Gemisch.

16. Verfahren nach einem oder mehreren der Ansprüche 1 bis 15, **dadurch gekennzeichnet, dass** die Effektpigmente Partikelgrößen von 2 - 200 µm aufweisen.

17. Verfahren nach einem oder mehreren der Ansprüche 1 bis 16, **dadurch gekennzeichnet, dass** ein Gemisch von mindestens zwei Effektpigmenten verwendet wird, wobei die Effektpigmente unterschiedliche Partikelgrößen aufweisen.

18. Verfahren nach einem oder mehreren der Ansprüche 1 bis 17, **dadurch gekennzeichnet, dass** der gegebenenfalls fetthaltige Überzug bzw. Schokoladeüberzug oder Fettglasur mit weiteren Farbstoffen und/oder Pigmenten versehen sind.

19. Verfahren nach einem oder mehreren der Ansprüche 1 bis 18, **dadurch gekennzeichnet, dass** ein oder mehrere Effektpigmente mit pulverförmigen Lebensmittelfarbstoffen auf die Lebensmitteloberfläche aufgebracht werden.

20. Verfahren nach einem oder mehreren der Ansprüche 1 bis 19, **dadurch gekennzeichnet dass** der gegebenenfalls fetthaltige Überzug bzw. Schokoladeüberzug oder Fettglasur zum Zeitpunkt des Auftrags der Pigmente noch flüssig-viskos ist.

21. Verwendung von Effektpigmenten auf Basis plättchenförmiger Substrate zur Einfärbung von Lebensmitteloberflächen mittels pneumatischer oder mechanischer Verfahren nach einem oder mehreren der Ansprüche 1 bis 20.

22. Lebensmittel mit eingefärbter Oberfläche, erhältlich durch ein Verfahren nach einem oder mehreren der Ansprüche 1 bis 20.
